# EUROPÄISCHE PATENTSCHRIFT

(11) **EP 1 520 460 B1**
(45) Veröffentlichungstag und Bekanntmachung des Hinweises auf die Patenterteilung: **13.02.2008**
(21) Anmeldenummer: 04103317.6
(22) Anmeldetag: 13.07.2004
(51) Int. Cl.: A01B 51/00, A01B 51/04, A01B 73/00

(54) **Parkvorrichtung und Mähgerät**
Parking stand and mower
Support à stationner et faucheuse

(30) Priorität: 16.08.2003 DE 10337596
(43) Veröffentlichungstag der Anmeldung: 06.04.2005
(73) Patentinhaber: DEERE & COMPANY, Moline, Illinois 61265-8098 (US)
(72) Erfinder: Roussel, David, 70130, Fretigney et Velloreille (FR); Guiet, Lionel, 70100, Gray (FR)
(74) Vertreter: Magin, Ludwig Bernhard

(56) Entgegenhaltungen:
- EP-A- 0 299 390
- GB-A- 1 452 308
- US-A- 3 751 889
- US-A- 6 128 892
- US-B1- 6 311 464

## Beschreibung

Die Erfindung betrifft ein landwirtschaftliches Gerät mit einem Träger, wenigstens einer Arbeitseinheit, die an dem Träger schwenkbar angebracht und im Außerbetriebszustand auf den Boden absetzbar ist, und mit einer Parkvorrichtung, und ein als Mähgerät ausgebildetes Gerät.

Aus dem Prospekt "Claas Faucheuses Rotatives ä tambours, Druckvermerk 10/98 (mohn) 50" ist ein Mähgerät bekannt, das einen Kupplungsrahmen zum vertikal schwenkbaren Anschluß an einen Feldhäcksler aufweist. An den Kupplungsrahmen sind mehrere Mäheinheiten angeschlossen, die in einer Außerbetriebsstellung längs der Fahrtrichtung geschwenkt werden und auf die sich das Mähgerät in der Außerbetriebsstellung absetzt. Der Kupplungsrahmen, der gegenüber den Mäheinheiten vertikal beweglich ist, stützt sich auf dem Boden mittels Stützen ab, sobald das Mähgerät von einem Trägerfahrzeug gelöst worden ist.

Bei landwirtschaftlichen Geräten, wie sie in der US 6 128 892 und US 6 311 464 gezeigt sind, stützt sich der Rahmen ebenfall mittels einer dort allerdings nicht gezeigten Stütze auf dem Boden ab, wie dies z B. in der GB 1 452 308 in den Figuren 1 und 3 zu sehen ist.

Das der Erfindung zugrunde liegende Problem wird darin gesehen, dass die Stützen je nach der Festigkeit des Bodens in den Boden einsinken können und somit das Mähgerät beim Wiederankoppeln nicht in der richtigen Stellung steht. Außerdem graben sich die Stützen in den Boden ein, wenn der Feldhäcksler zum Ankuppeln an das Mähgerät schräg herangefahren wird und dabei das Mähgerät gerade rückt.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise kann der Träger, der immerhin einige hundert Kilogramm wiegen kann, nicht mit seinen Stützen in den Boden eindringen, denn er stützt sich auf wenigstens einer Arbeitseinheit ab, die eine wesentlich größere Aufstandsfläche bietet. Selbst wenn das Gerät mit seinen Arbeitseinheiten über den Boden geschoben wird, bis ein Anschluß möglich ist, können sich die Stützen nicht in den Boden eingraben. Als landwirtschaftliches Gerät kann sowohl ein Mäh- als auch ein Schwadgerät, wie auch ein Bodenbearbeitungsgerät, ein Sägerät oder dergleichen verwendet werden. Wenn auch bereits eine Arbeitseinheit ausreicht, so können auch zwei, drei oder noch mehr verwendet werden. Bei dem Träger handelt es sich meist um einen Querbalken, der das gesamte Gerät trägt. Die Stütze hilft nicht nur beim Anschließen des Geräts, sondern macht das Gerät in sich auch zu einer festen Einheit, was beim Transport auf einem LKW oder per Bahn sehr hilfreich ist. Bei der Stütze handelt es sich um ein Rohr, eine Schiene, einen Hydraulikzylinder oder dergleichen.

Wenn der Träger mehrteilig ausgebildet ist und einen Kupplungsrahmen besitzt, der dem verbleibenden Teil des Trägers mit seinen Arbeitseinheiten gegenüber beweglich ist, z. B. schwenkbar um eine Lagerachse, hat dies den Vorteil, dass dieser in seiner Lage an die Lage der Kupplungspunkte des Trägerfahrzeugs angeglichen werden kann, während die Arbeitseinheiten unverändert auf dem Boden bleiben. Hierzu kann die Lage eines oder beider Angriffspunkt der Stütze oder deren Länge verändert werden, so dass der Kupplungsrahmen in die gewünschte Stellung gelangt. Die Verstellung kann manuell und mechanisch oder hydraulisch, bzw. elektrisch erfolgen.

Der Träger und gegebenenfalls der Kupplungsrahmen können zum Anbau an das Trägerfahrzeug richtig positioniert werden, indem sie gegenüber der oder den Arbeitseinheiten verstellbar sind. Da der Träger oder dessen Kupplungsrahmen sehr schwer sind, ist es hilfreich, wenn hierzu eine Stellvorrichtung vorgesehen ist, die insbesondere hydraulisch betrieben werden kann. An einem Gerät, bei dem die Neigung der Arbeitseinheiten gegenüber dem Boden eingestellt werden kann, kann diese Verstellvorrichtung auch zur Verstellung des Trägers bzw. Kupplungsrahmens beim Ankuppeln benutzt werden. Wenn für diese Neigungsverstellung bereits ein Stellmotor vorhanden ist, der seitens des Trägerfahrzeugs gespeist werden kann, kann die Erfindung mit nahezu unerheblichen Mehrkosten realisiert werden.

Die einfachste und daher kostengünstigste Art der Höhenanpassung des Geräts an das Trägerfahrzeug erfolgt durch eine längenveränderliche Stütze. Dies kann mit einer Gewindeverbindung, einer Ratsche, einer Zahnstange und einem Ritzel, einer Lochschiene, einem Kniehebel und dergleichen oder mit einem Stellmotor erfolgen, der auf jegliche Art angetrieben werden kann.

Damit die Stütze während des Betriebs des Geräts nicht stört, ist sie demontierbar gestaltet. Vorteilhafterweise erfolgt die Demontage ohne Werkzeug mit einfachen Steckverbindungen, die mit Splinten, Riegeln oder dergleichen gesichert werden. Es ist auch möglich, nur ein Ende der Stütze zu lösen und die Stütze in eine andere Stellung zu schwenken. Sofern an der Arbeitseinheit Öffnungen, Kammern oder dergleichen vorgesehen sind, kann die Stütze in diesen verankert werden.

Eine mehrteilige Stütze, z. B. mit einem Fuß, Flansch, Platte oder dergleichen für die Verbindung mit der Arbeitseinheit und einer Strebe, einem Gestänge, einem Lenker, einem Seil oder Kette oder dergleichen, hat den Vorteil, dass sie leicht angebaut bzw. demontiert werden kann.

Die Verwendung eines Hakens an der Stütze bzw. dem Fuß lässt eine rutsch- und verliersichere Befestigung der Stütze an der Arbeitseinheit zu.

Mähgeräte werden nur saisonal benutzt, weshalb es dort sehr hilfreich ist, wenn sie schnell von dem Trägerfahrzeug gelöst und an dieses wieder angeschlossen werden können, und zwar insbesondere dann, wenn das Trägerfahrzeug kein Ackerschlepper ist, der das Mähgerät mittels einer verstellbaren Dreipunktkupplung aufnimmt. Angesichts des Gewichts des Trägers, z. B. bei einem Mähgerät mit neun Metern Arbeitsbreite, ist es erforderlich dafür zu sorgen, dass ein abgestelltes Mähgerät nicht kippt; hierfür ist eine Mäheinheit von z. B. drei Meter Breite geeignet, die das entsprechende Gegengewicht aufbringt.

Die Kippgefahr wird um so leichter gebannt, je größer der Hebelarm des Gegengewichts ist. Wird also eine Mäheinheit von dem Träger weitestmöglich weggeschwenkt, wird auch das Gegenmoment erhöht.

Das Mähgerät kann leicht an einen Feldhäcksler oder Mähdrescher angeschlossen werden, wenn es mit einem Schwenklager versehen ist, das wie bei einem Schrägförderer oder einem Einzugsgehäuse eines Feldhäckslers an das Trägerfahrzeug, nämlich einen Feldhäcksler oder einen Mähdrescher, angeschlossen wird. Da das Trägerfahrzeug ohne Mähgerät ein anderes Gewicht hat als mit und somit aufgrund der Nachgiebigkeit der Reifen mit einem Schwenkgehäuse, an das Schwenklager heranfährt, das oberhalb des Schwenklagers liegt, und da die Lage des Schwenkgehäuses auch nicht leicht veränderbar ist, ist es umso hilfreicher, wenn eine Höhenverstellung des Trägers bzw. Kupplungsrahmen möglich ist.

In der Zeichnung ist ein nachfolgend näher beschriebenes Ausführungsbeispiel der Erfindung dargestellt. Es zeigt:
- Fig. 1: ein landwirtschaftliches Gerät im Transportzustand und in Seitenansicht und

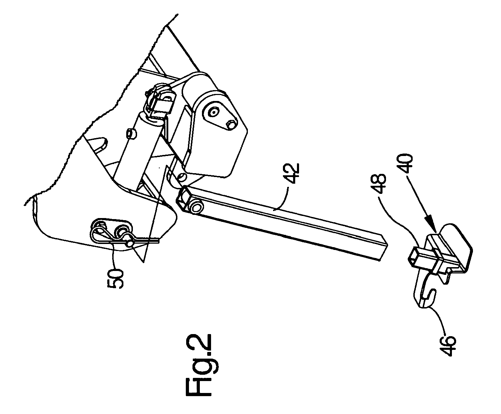

- Fig. 2: eine Stütze des Geräts.

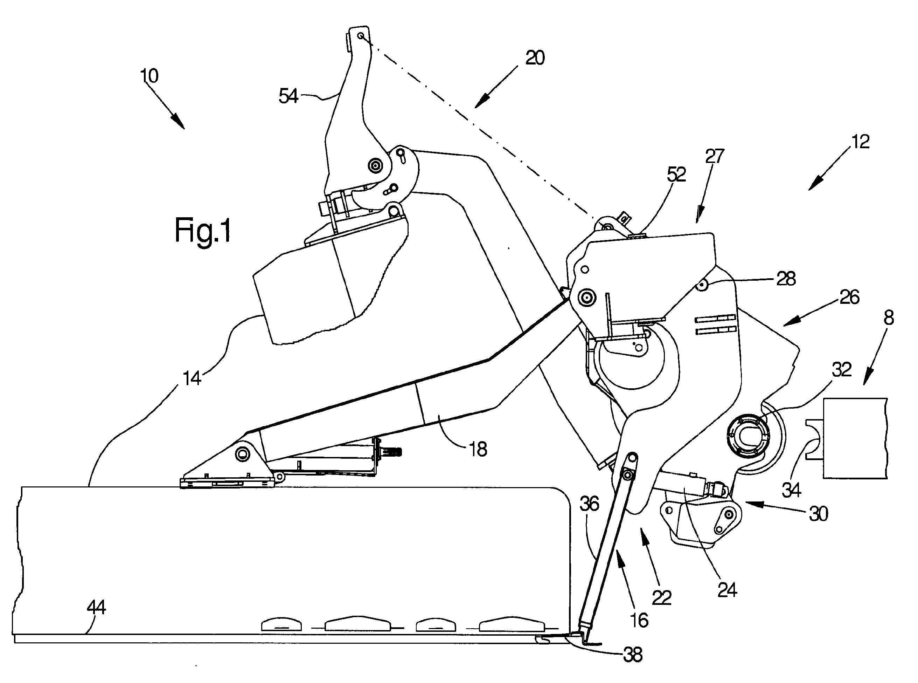

Ein in Figur 1 gezeigtes landwirtschaftliches Gerät 10 enthält einen Träger 12, drei Arbeitseinheiten 14 und eine Parkvorrichtung 16.

Das Gerät 10 ist als ein Mähgerät dargestellt, das z. B. an einen Feldhäcksler oder ein anderes Trägerfahrzeug 8 angebaut werden kann und mittels einer nicht gezeigten Hubvorrichtung in der Höhe verstellbar ist. Das Trägerfahrzeug 8 ist nur durch einen vorderen Rahmenteil dargestellt. Anstatt der Ausbildung als ein Mähgerät könnte auch die als ein Bodenbearbeitungsgerät, als ein Sägerät, als ein Spritzgerät oder dergleichen landwirtschaftliches Gerät gewählt werden. Dieses Gerät 10 ist lösbar mit dem vorgenannten Trägerfahrzeug 8 verbindbar und kann außerhalb des Betriebs auf eine Abstellfläche abgesetzt und dort gelagert werden.

Der Träger 12 dient dazu, die Arbeitseinheiten 14 zusammenzufassen und an das Trägerfahrzeug 8 anzuschließen. Hierzu besitzt der Träger 12 Arme 18, die die Arbeitseinheiten 14 tragen, und zwar vorzugsweise so, dass äußere Arbeitseinheiten 14 um circa neunzig Grad nach vorne geschwenkt werden können, wo sie sich im Wesentlichen in der Fahrtrichtung erstrecken. Der Träger 12 ist im Wesentlichen jochartig ausgebildet, in dessen oberen, seitlich außen gelegenen Bereich jeweils ein Arm 18 im Wesentlichen horizontal, aber auch vertikal schwenkbar angreift, in dessen mittlerem Bereich eine Hubvorrichtung 20 für eine mittlere Arbeitseinheit 14 vorgesehen ist, und in deren unteren seitlich außen liegendem Bereich ein Anschluß 22 für die Parkvorrichtung 16, wie auch für eine Stellvorrichtung 24 vorgesehen ist. Zu dem Träger 12 gehört in diesem Ausführungsbeispiel auch ein Kupplungsrahmen 26, der in einem oberen Lager 28 mit einer horizontalen Schwenkachse an einem Rahmen 27 des Trägers 12 vertikal schwenkbar festgelegt ist. Der Kupplungsrahmen 26 dient selbst wiederum dem vertikal schwenkbaren Anschluß an das Trägerfahrzeug 8, wozu sich in einem rückwärtigen und in der Zeichnung rechts gelegenen Endbereich des Kupplungsrahmens 26 ein Schwenklager 32 zwischen dem Lager 28 und einem Anschluß 30 befindet, dessen Schwenkachse horizontal und senkrecht zu der Zeichenebene verläuft. Dieses Schwenklager 32 wird in einem Schwenkgehäuse 34 an dem Trägerfahrzeug 8 aufgenommen. Der Kupplungsrahmen 26 ist mit Antriebskomponenten, wie einem Riementrieb, Winkelgetriebe und dergleichen ausgerüstet, auf die nicht näher eingegangen zu werden braucht. Der Anschluß 30 befindet sich in dem unteren Endbereich des Kupplungsrahmens 26 und korrespondiert mit dem Anschluß 22. Es ist ersichtlich, dass eine Schwenkbewegung des Kupplungsrahmens 26 um das Lager 28 zu einer Änderung der Höhenlage des Schwenklagers 32 führt.

Der Rahmen 27 ist ein Schweißzusammenbau, an dem die Arme 18, die Hubvorrichtung 20 und der Kupplungsrahmen 26 angreifen und der auch einen Teil der Antriebskomponenten des Geräts 10 trägt.

Bei den Arbeitseinheiten 14 handelt es sich um Mäheinheiten, die mit ihren Oberseiten jeweils pendelnd an einem Arm 18 angreifen. Figur 1 zeigt eine untere, in Fahrtrichtung linke Arbeitseinheit 14, die eine untere, rechte Arbeitseinheit 14 verdeckt und sich in einer Außerbetriebsstellung auf dem Boden befindet. Eine mittlere Arbeitseinheit 14 ist in der Außerbetriebsstellung oberhalb der vorgenannten Arbeitseinheiten 14 vorgesehen. Es ist in der Zeichnung zu erkennen, dass die auf dem Boden befindliche Arbeitseinheit 14 wesentlich größer ist als der Träger 14. An dem beschriebenen Gerät 10 sind insgesamt drei Arbeitseinheiten 14 vorgesehen; allerdings reicht sowohl eine einzige aus, wie auch mehr als drei vorgesehen werden können. In einer Betriebsstellung sind alle Arbeitseinheiten 14 gleich ausgerichtet, d. h. sie verlaufen im Wesentlichen quer zur Fahrtrichtung und in zwei Reihen. In einer Transportstellung - sh. Figur 1 - erstrecken sich die beiden äußeren Arbeitseinheiten 14 hauptsächlich in der Fahrtrichtung, während sich die mittlere quer zur Fahrtrichtung allerdings in einer über den äußeren Arbeitseinheiten 14 gelegenen Ebene befindet. In der Betriebsstellung bilden die Arbeitseinheiten 14 drei Standbeine für das Gerät 10.

Die Parkvorrichtung 16 enthält eine Stütze 36, die sich zwischen dem Anschluß 22 und einer Kante 38 der auf dem Boden ruhenden Arbeitseinheit 14 erstreckt. Bei der Kante 38 handelt es sich in diesem Ausführungsbeispiel um eine untere Kante 38, die der Längsmittenebene des Geräts 10 zugelegen ist, wenn die Arbeitseinheiten 14 ihr Betriebsstellung einnehmen. Anstelle der Kante 38 könnte auch jede andere geeignete Stelle der Arbeitseinheit 14 gewählt werden, an der die Stütze 36 sicher angebracht werden kann. Die Stütze 36 setzt sich aus einem Fuß 40 und einer Strebe 42 zusammen, die ineinander gesteckt werden. In nicht dargestellten Ausführungsbeispielen könnte die Stütze 36 auch einteilig, als Schraubteleskop, als Stellmotor, als Zahnstange mit Ritzel und dergleichen ausgebildet sein. Die Stütze 36 stellt eine wenigstens in einer Richtung feste Verbindung zwischen dem Träger 12 und den Arbeitseinheiten 14 her, die insgesamt zu einem in sich stabilen Gerät 10 führt, was sowohl für den Transport, als auch für den Ankuppelvorgang an das Trägerfahrzeug 8 sehr hilfreich ist.

Der Fuß 40 stellt ein mehrfach abgekantetes Blech dar, das auf die Kante eines Mähbalkens 44 sicher aufgesetzt werden kann. Der Fuß 40 ist zudem mit einem Haken 46 versehen, der in eine üblicherweise in dem Mähbalken 44 vorhandene in der Zeichnung aber nicht sichtbare Öffnung eingreift, die zum Austausch von Messern vorgesehen ist. Auf diese Weise wird der Fuß 40 formschlüssig an dem Mähbalken 44 gesichert. Der Fuß 40 enthält außerdem einen Stutzen 48, der der konzentrischen Aufnahme der Strebe 42 dient und sich leicht schräg nach oben erstreckt.

Die Strebe 42 besteht im Wesentlichen aus einem Rohr, dessen unterer Endbereich auf den Stutzen 48 aufgesteckt werden kann und in dessen oberen Endbereich ein Formschlußelement 50, nämlich eine Hülse oder Büchse vorgesehen ist, das sich quer durch die Strebe 42 erstreckt und beidseitig offen ist. Das Formschlußelement 50 wird an dem Anschluss 22 mit dem Rahmen 27 verbunden, indem es nämlich über ein weiteres Formschlußelement 52, diesmal in der Form eines Bolzens, Stiftes, Zapfens oder dergleichen geschoben und mittels eines dritten, nicht gezeigten Formschlusselements, z. B. eines Splints oder dergleichen gesichert wird.

Die Arme 18 sind als Schweißzusammenbauten ausgeführt und in einem kardanischen Lager 52 an dem Rahmen 27 vertikal und horizontal schwenkbar angebracht. Für beide Schwenkbewegungen sind einfach- oder doppeltwirkende Stellmotoren vorgesehen. Die horizontale Schwenkbewegung dient dazu, die äußeren Arbeitseinheiten 14 zwischen und in eine Betriebsstellung oder eine Transportstellung - sh. Figur 1 - zu schwenken. Die vertikale Schwenkbewegung dient dazu, die Arbeitseinheit 14 anzuheben, so dass sie keinen Kontakt mit dem Boden mehr hat und folglich nicht mehr mähen kann - oder umgekehrt. Der untere und in Figur 1 linke Endbereich des Arms 18 ist mit der Arbeitseinheit 14 pendelnd verbunden.

Die Hubvorrichtung 20 ist nicht näher dargestellt, enthält im Wesentlichen aber einen Tragarm 54, der mittels eines nicht gezeigten Stellmotors höhenbeweglich an dem Träger 12 angreift und die mittlere Arbeitseinheit 14 trägt und in der Höhe verstellt.

Der Anschluß 22 ist sowohl mit der Stellvorrichtung 24 als auch mit der Stütze 36, bzw. deren Strebe 42 formschlüssig z. B. mit Zapfen, Bolzen, Gabelverbindung und dergleichen verbunden; deren Verbindung mit dem Anschluss 22 muß nicht an derselben Stelle, sondern kann getrennt voneinander und auf unterschiedliche Weise erfolgen.

Die Stellvorrichtung 24 ist als ein einfachwirkender Hydraulikzylinder ausgebildet; denkbar wäre auch die Ausbildung als doppeltwirkender Hydraulikzylinder oder als Elektromotor. Die Stellvorrichtung 24 spreizt den Träger 12, d.h. dessen Rahmen 27 und den Kupplungsrahmen 26 um das Lager 28 oder zieht diese zusammen. Wenn das Gerät 10 an das Trägerfahrzeug 8 angeschlossen ist, bewirkt eine Betätigung der Stellvorrichtung 24 sowohl eine Schnittwinkel- als auch eine Arbeitshöhenänderung. Die Beaufschlagung mit Energie erfolgt normalerweise von dem Trägerfahrzeug 8 aus, indem nicht dargestellte Leitungen an ein Hydrauliksystem oder dergleichen angeschlossen werden. Der Anschluß dieser Leitungen kann bereits/noch erfolgen, wenn das Gerät 10 noch nicht komplett an das Trägerfahrzeug 8 angeschlossen ist.

Zu weiteren Einzelheiten des Geräts 10 wird auf die Beschreibung in der EP A1 1 252 808 verwiesen, sofern nicht die Parkvorrichtung 16 betroffen ist.

Nach alledem ergibt sich folgende Funktion.

Zum Arbeitsbetrieb werden die äußeren Arbeitseinheiten 14 von der dargestellten Lage nach außen und die mittlere Arbeitseinheit 14 nach unten geschwenkt, so dass sie alle auf dem Boden ruhen. Zum Transportbetrieb werden die Arbeitseinheiten 14 in die dargestellte Position gebracht. Um das Gerät 10 von dem Trägerfahrzeug 8 zu trennen und auf den Boden abzusetzen, wird das Gerät 10 angehoben, der Fuß 40 auf dem Mähbalken 44 gesichert, die Strebe 42 auf den Stutzen 48 aufgesteckt und an dem Anschluß 22 gesichert; erforderlichenfalls muß hierzu die Arbeitseinheit 14 um den Anschluß an dem Arm 18 geringfügig von Hand gekippt werden. Anschließend wird das Gerät 10 abgesenkt, das Schwenklager 32 von dem Schwenkgehäuse 34 und die Energiezufuhr zu den verschiedenen Stellvorrichtung, z. B. der Stellvorrichtung 24 getrennt. Schließlich wird das Trägerfahrzeug 8 entfernt, während der Träger 12 auf der Stütze 36 ruht. In dieser abgesetzten Stellung bleibt die räumliche Beziehung zwischen den Arbeitseinheiten 14 und dem Träger 12 erhalten, zumal - anders als im Stand der Technik - die Stütze 36 aufgrund der großen Auflagefläche der Arbeitseinheiten 14 nicht in den Boden einsinken kann.

Zum Anschluß des Geräts 10 an das Trägerfahrzeug 8 wird letzteres an das Gerät 10 heran gefahren, damit das Schwenklager 32 in das Schwenkgehäuse 34 eintreten kann. Da das Trägerfahrzeug 8 ohne Gerät 10 leichter ist als mit ihm, wird sich aufgrund der Nachgiebigkeit der Reifen das Schwenkgehäuse 34 geringfügig oberhalb des Schwenklagers 32 befinden. Zur Überwindung dieser Höhendifferenz werden die Leitungen zum Betrieb der Stellvorrichtung 24 angeschlossen, die Stellvorrichtung 24 ausgefahren, bis das Schwenklager 32 in das Schwenkgehäuse 34 passt und das Trägerfahrzeug 8 an das Gerät 10 herangefahren, bis beide miteinander verbunden werden können. Beim Heranfahren des Trägerfahrzeugs 8 an das Gerät 10 wird das ganze Gerät 10 zurechtgerückt, ohne dass sich die Stützen 36 in den Boden eingraben, wenn eines der Schwenklager 32 auf ein Schwenkgehäuse 34 trifft, während die jeweils zweiten noch getrennt sind. Dabei wird gegebenenfalls das gesamte Gerät 10 mit den Arbeitseinheiten 14 auf dem Boden gleiten, ohne seine Höhe zu verändern.

## Patentansprüche

1. Landwirtschaftliches Gerät (10) mit einem Träger (12), wenigstens einer Arbeitseinheit (14), die an dem Träger (12) schwenkbar angebracht und im Außerbetriebszustand auf den Boden absetzbar ist , und mit einer Parkvorrichtung (16), **dadurch gekennzeichnet, daß** die Parkvorrichtung (16) eine Stütze (36) enthält, die sich zwischen dem Träger (12) und der Arbeitseinheit (14) erstreckt und den Träger (12) im Außerbetriebszustand auf der auf dem Boden ruhenden Arbeitseinheit (14) abstützt.

2. Landwirtschaftliches Gerät nach Anspruch 1, **dadurch gekennzeichnet, dass** der Träger (12) einen Kupplungsrahmen (26) zum Anschluß an ein Trägerfahrzeug (8) und einen schwenkbar mit diesem verbundenen Rahmen (27) enthält, an dem die Arbeitseinheit (14) angebracht ist, wobei die Stütze (36) an dem Kupplungsrahmen (26) angreift.

3. Landwirtschaftliches Gerät nach Anspruch 2, **gekennzeichnet durch** eine insbesondere fremdkraftbetätigbare Stellvorrichtung (24) zwischen dem Träger (12) und der Arbeitseinheit (14).

4. Landwirtschaftliches Gerät nach einem oder mehreren der vorherigen Ansprüche, **dadurch gekennzeichnet, dass** die Stütze (36) in der Länge verstellbar ist.

5. Landwirtschaftliches Gerät nach einem oder mehreren der vorherigen Ansprüche, **dadurch gekennzeichnet, dass** die Stütze (36) an dem Träger (12), insbesondere dem Kupplungsrahmen (26), und der Arbeitseinheit (14) formschlüssig, insbesondere mit Splinten, festlegbar ist.

6. Landwirtschaftliches Gerät nach einem oder mehreren der vorherigen Ansprüche, **dadurch gekennzeichnet, dass** die Stütze (36) zweiteilig aus einem Fuß (40) und einer Strebe (42) gebildet ist.

7. Landwirtschaftliches Gerät nach einem oder mehreren der vorherigen Ansprüche, **dadurch gekennzeichnet, dass** die Stütze (36) oder deren gegebenenfalls vorhandener Fuß (40) einen Haken (46) enthält, der in die Arbeitseinheit (14) einhakbar ist.

8. Landwirtschaftliches Gerät nach einem oder mehreren der vorherigen Ansprüche in der Form eines Mähgeräts, **dadurch gekennzeichnet, dass** an dem Träger (12) wenigstens eine als Mäheinheit ausgebildete Arbeitseinheit (14) vorgesehen ist, die auf den Boden absetzbar ist und das gesamte Mähgerät gegen Kippen hält.

9. Landwirtschaftliches Gerät nach Anspruch 8, **dadurch gekennzeichnet, dass** drei Arbeitseinheiten (14) vorgesehen sind, die in einer Abstellposition unter einem rechten Winkel zueinander verlaufen.

10. Landwirtschaftliches Gerät nach Ansprüchen 8 oder 9, **dadurch gekennzeichnet, dass** der Kupplungsrahmen (26) trägerfahrzeugseitig mit einem Schwenklager (32) verbunden ist, das in einem Schwenkgehäuse (34) des Trägerfahrzeugs (8) aufnehmbar ist.

## Claims

1. Agricultural implement (10) having a carrier (12), at least one work unit (14), which is pivotably attached to the carrier (12) and in the inoperative state can be lowered onto the ground, and having a parking apparatus (16), **characterized in that** the parking apparatus (16) contains a support (36), which extends between the carrier (12) and the work unit (14) and supports the carrier (12) in the inoperative state on the work unit (14) resting on the ground.

2. Agricultural implement according to Claim 1, **characterized in that** the carrier (12) contains a coupling frame (26) for connection to a carrier vehicle (8), and a frame (27), which is pivotably connected to the said coupling frame (26) and to which the work unit (14) is attached, the support (36) acting upon the coupling frame (26).

3. Agricultural implement according to Claim 2, **characterized by** an in particular power-operated control mechanism (24) between the carrier (12) and the work unit (14).

4. Agricultural implement according to one or more of the previous claims, **characterized in that** the support (36) is adjustable in length.

5. Agricultural implement according to one or more of the previous claims, **characterized in that** the support (36) can be fixed to the carrier (12), in particular the coupling frame (26), and to the work unit (14) by positive locking, in particular with cotter pins.

6. Agricultural implement according to one or more of the previous claims, **characterized in that** the support (36) is formed in two parts from a base (40) and a strut (42).

7. Agricultural implement according to one or more of the previous claims, **characterized in that** the support (36), or, where present, its base (40), contains a hook (46), which can be hooked into the work unit (14).

8. Agricultural implement according to one or more of the previous claims in the form of a mower, **characterized in that** on the carrier (12) there is provided at least one work unit (14) configured as a mowing unit, which work unit can be lowered onto the ground and secures the whole of the mower against tilting.

9. Agricultural implement according to Claim 8, **characterized in that** three work units (14) are provided, which, in a parking position, extend at right angles to one another.

10. Agricultural implement according to Claim 8 or 9, **characterized in that** the coupling frame (26) is connected on the carrier vehicle side to a pivot bearing (32), which can be received in a swivel housing (34) of the carrier vehicle (8).

## Revendications

1. Outil agricole (10) comportant un support (12), au moins une unité de travail (14), qui est montée pivotante contre le support (12) et qui peut être posée sur le sol dans la position hors service, et comportant un dispositif de stationnement (16), **caractérisé en ce que** le dispositif de stationnement (16) comporte une béquille (36) qui s'étend entre le support (12) et l'unité de travail (14) et qui supporte le support (12) dans la position hors service sur l'unité de travail (14) reposant sur le sol.

2. Outil agricole selon la revendication 1, **caractérisé en ce que** le support (12) comporte un châssis d'accouplement (26) pour l'attelage à un véhicule porteur (8) et un châssis (27), qui est relié de manière pivotante à celui-ci et sur lequel est montée l'unité de travail (14), la béquille (36) étant attachée au châssis d'accouplement (26).

3. Outil agricole selon la revendication 2, **caractérisé par** un dispositif de réglage (24), apte à être actionné en particulier par une force extérieure et monté entre le support (12) et l'unité de travail (14).

4. Outil agricole selon une ou plusieurs des revendications précédentes, **caractérisé en ce que** la béquille (36) est réglable en longueur.

5. Outil agricole selon une ou plusieurs des revendications précédentes, **caractérisé en ce que** la béquille (36) peut être fixée par conjugaison de forme, en particulier au moyen de goupilles fendues, contre le support (12), en particulier contre le châssis d'accouplement (26) et l'unité de travail (14).

6. Outil agricole selon une ou plusieurs des revendications précédentes, **caractérisé en ce que** la béquille (36) est réalisée en deux parties, un pied (40) et une entretoise (42).

7. Outil agricole selon une ou plusieurs des revendications précédentes, **caractérisé en ce que** la béquille (36) ou le pied (40) de celle-ci, éventuellement présent, comporte un crochet (46), qui est propre à être accroché dans l'unité de travail (14).

8. Outil agricole selon une ou plusieurs des revendications précédentes sous la forme d'une faucheuse, **caractérisé en ce qu'**il est prévu sur le support (12) au moins une unité de travail (14), qui est réalisée sous forme d'unité de fauchage et qui peut être posée sur le sol et empêche le basculement de l'ensemble de la faucheuse.

9. Outil agricole selon la revendication 8, **caractérisé en ce qu'**il est prévu trois unités de travail (14) qui, dans une position de travail, s'étendent en formant un angle droit entre elles.

10. Outil agricole selon la revendication 8 ou 9, **caractérisé en ce que** le châssis d'accouplement (26), du côté du véhicule porteur, est relié à un palier de pivotement (32), qui est apte à être logé dans un boîtier de pivotement (34) du véhicule porteur (8).
